# FASCICULE DE BREVET EUROPEEN

(11) **EP 1 269 160 B1**
(45) Date de publication et mention de la délivrance du brevet: **14.06.2006**
(21) Numéro de dépôt: 01921459.2
(22) Date de dépôt: 03.04.2001
(51) Int. Cl.: G01N 21/64

(54) **APPAREIL D'IMAGERIE ASSOCIE A UNE BASE DE DONNEES IMAGES**
BILDGEBUNGSEINHEIT MIT ASSOZIERTER BILDERDATENBANK
IMAGING APPARATUS ASSOCIATED WITH AN IMAGE DATABASE

(30) Priorité: 06.04.2000 FR 0004411
(43) Date de publication de la demande: 02.01.2003
(73) Titulaire: Imstar S.A., 75006 Paris (FR)
(72) Inventeur: SOUSSALINE, Françoise, F-75014 Paris (FR); PAPINE, Alexandre, F-91370 Verrières Le Buisson (FR)
(74) Mandataire: Plaçais, Jean Yves
(86) Numéro de dépôt international: PCT/FR2001/000994
(87) Numéro de publication internationale: WO 2001/077649

(56) Documents cités:
- WO-A-96/05488
- WO-A-98/38490
- KERLAVAGE A R ET AL: "DATA MANAGEMENT AND ANALYSIS FOR HIGH-THROUGHPUT DNA SEQUENCING PROJECTS" IEEE ENGINEERING IN MEDICINE AND BIOLOGY MAGAZINE,US,IEEE INC. NEW YORK, vol. 14, no. 6, 1 novembre 1995 (1995-11-01), pages 710-717, XP000598295 ISSN: 0739-5175
- ALLEE C: "Data management for automated drug discovery laboratories" LABORATORY ROBOTICS AND AUTOMATION, 1996, WILEY, USA, vol. 8, no. 5, pages 307-310, XP002134398 ISSN: 0895-7533

## Description

La présente invention se rapporte à l'imagerie d'échantillons et à la gestion des images à l'aide d'une base de données relationnelle, intégrée, et polyvalente.

Elle trouve une application générale dans la capture et l'analyse quantitative d'images et plus particulièrement dans les applications des sciences de la vie basées sur l'identification et la mesure d'ADN (acide désoxyribonucléiques) à haute résolution et haut débit.

Par exemple, elle trouve une application particulière dans les études en immunofluorescence, cytogénétique, génomique appliquée, cytologie, biologie moléculaire, histo-cytochimie, pharmacologie, toxicologie, et pathologie moléculaire, etc.

On connait déjà de nombreux appareils d'imagerie par fluorescence d'échantillons biologiques. Par exemple, dans le brevet FR-A-2532756, il est décrit un appareil d'imagerie par fluorescence dans lequel un faisceau lumineux d'excitation est acheminé sur un échantillon disposé sur porte-échantillon. Les radiations émises par l'échantillon ainsi excité sont acheminées vers des moyens de détection. Les signaux détectés sont ensuite traités pour acquérir une image correspondante de tout ou partie de l'échantillon observé. En fluorescence, le faisceau d'excitation est filtré en longueur d'onde afin de choisir le rayonnement utile pour produire le phénomène de fluorescence, tandis que les radiations émises sont filtrées afin d'arrêter les rayonnements n'intéressant pas le phénomène de fluorescence.

On connaît aussi des appareils d'imagerie, (par exemple dans le brevet US-A-4122518 - CASTLEMAN et al), qui comprennent en outre une unité de commande électronique capable d'ajuster le déplacement du porte-échantillon. Généralement, les images acquises sont stockées sous forme numérique dans une base de données. A l'aide d'une telle base de données, l'utilisateur est capable d'effectuer des tâches de traitement de données, de reconnaissance d'objets et de leur classification (par exemple de type caryotypage). En pratique, l'utilisateur sélectionne une image par son nom de fichier, ce qui offre peu de possibilités de tri. De plus, la gestion de la base de données est généralement limitée à une seule application, relativement statique, sans grande possibilité d'évolution et mal commode dans son interactivité avec l'utilisateur.

La présente invention apporte une solution à ces problèmes.

Elle vise ainsi à fournir une base de données images relationnelle, intégrée, polyvalente, et permettant, lorsqu'elle est associée à un appareil d'imagerie approprié, d'effectuer notamment une sélection et un traitement d'images selon des critères beaucoup plus riches et sophistiqués que le simple nom du fichier correspondant à l'image, notamment selon des paramètres liés à l'acquisition des images, et/ou à l'identification de l'échantillon, et/ou aux données liées et/ou issues et/ou extraites de ces images.

Elle porte ainsi sur un appareil d'imagerie du type comprenant :
- un porte-échantillon ajustable en X et Y;
- un dispositif d'illumination, comprenant une source lumineuse propre à générer un faisceau d'illumination à large bande spectrale,
- des premiers moyens optiques de transport propres à acheminer ledit faisceau d'illumination sur un échantillon disposé sur le porte-échantillon;
- un dispositif de réception, comprenant des seconds moyens optiques de transport propres à acheminer les rayonnements émis et/ou transmis par l'échantillon ainsi illuminé,
- des moyens de détection montés à la sortie du dispositif de réception,
- les premiers et/ou seconds moyens de transport comprenant des moyens de filtrage ajustables;
- des moyens de traitement pour traiter les signaux détectés par les moyens de détection afin d'acquérir une image correspondante d'au moins une zone choisie de l'échantillon;
- une unité de commande propre à piloter l'ajustement du porte-échantillon, les paramètres des moyens de filtrage , les paramètres des moyens de traitement et les paramètres du dispositif d'illumination selon une pluralité de modes d'acquisition d'images,
- une base de données images, liée aux moyens de traitement, et propre à contenir les images ainsi acquises.

Selon une définition générale de l'invention,le porte-échantillon est en outre ajustable en Z,
- chaque acquisition d'image comprend une commande d'au moins un élément parmi le déplacement du porte-échantillon, les paramètres des moyens de filtrage, les paramètres des moyens de traitement, et les paramètres du dispositif d'illumination,
- les moyens de stockage sont agencés pour stocker les images acquises elles-même et pour maintenir une correspondance entre chaque image acquise et les valeurs de chacun de ses paramètres d'acquisition,
- la base de données images comprend une pluralité de tables comprenant chacune des champs relatifs au moins aux conditions d'acquisition des images, et à l'identification de l'échantillon, les tables étant reliées les unes aux autres selon des relations choisies;
- l'appareil d'imagerie comprend en outre une unité de consultation pour interroger la base de données images selon au moins une requête contenant au moins un critère correspondant à au moins un paramètre d'acquisition, pour sélectionner les images répondant audit critère et pour afficher et/ou traiter lesdites images ainsi sélectionnées.

La Demanderesse a ainsi observé de façon surprenante qu'en maîtrisant et commandant l'ajustement notamment des paramètres de déplacement du porte-échantillon, des paramètres des moyens de filtrage et/ou des paramètres des moyens de traitement, elle dispose de nombreuses informations liées à l'acquisition des images, dont les valeurs peuvent être saisies et reliées entre elles dans les tables respectives de la base de données images, ce qui permet d'offrir une base de données images relationnelle, intégrée, polyvalente, susceptible d'être interrogée selon des requêtes contenant des critères correspondant au moins aux conditions d'acquisition des images et/ou à l'identification de l'échantillon. Il en résulte que l'utilisateur d'un tel appareil d'imagerie selon l'invention dispose d'une base de données images à tables multiples susceptible d'être interrogée selon des requêtes riches, sophistiquées, dynamiques, liées directement au moins aux conditions d'acquisition des images et/ou à l'identification de l'échantillon, ce que n'offrent pas les bases de données de l'état de la technique.

Selon une autre caractéristique importante de l'invention, l'appareil comprend en outre des moyens de traitement et d'analyse conjointe des images acquises, de leurs critères d'acquisition, ainsi que de données liées et/ou extraites des images acquises.

Enfin, la base de données est polyvalente puisqu'elle est susceptible d'être utilisée pour n'importe quelles applications d'imagerie (fluorescence, microscopie en transmission, fond clair, etc), ce qui n'est pas le cas des bases de données de l'état de la technique qui sont généralement dédiées à une seule application.

En pratique, les paramètres relatifs aux conditions d'acquisition des images appartiennent au groupe suivant :
- coordonnées en X, Y, ou Z du porte-échantillon;
- conditions temporelles de l'acquisition des images;
- conditions de fonctionnement de la source lumineuse;
- la longueur d'onde, la largeur de bande, le facteur d'atténuation, la position des moyens de filtrage;
- nature et paramètres de fonctionnement des éléments constitutifs des premiers et seconds moyens de transport;
- paramètres de fonctionnement des moyens de détection, et
- paramètres de fonctionnement des moyens de traitement.

De préférence, les moyens de traitement et d'analyse comprennent des fonctions de traitement du groupe suivant : traitement de type contraste, filtrage linéaire, opérations de morphologie mathématique, segmentation; des fonctions d'analyse du groupe suivant : analyse de type caractérisation de forme, de densité, de texture, de topologie et d'organisation spatiale;des fonctions de classification de données tirées des images, du groupe suivant : tableur, outil d'analyse et d'interprétation statistique.

D'autres caractéristiques et avantages de l'invention apparaîtront à la lumière de la description détaillée ci-après et des dessins dans lesquels :
- la figure 1 représente schématiquement un appareil d'imagerie selon l'invention;
- la figure 2 est un organigramme illustrant l'acquisition des images et la saisie des valeurs d'acquisition dans la base de données images selon l'invention;
- la figure 3 représente un diagramme de la base de données d'images selon l'invention représentant les relations entre les tables multiples;
- la figure 4 représente un organigramme illustrant la sélection d'une image stockée dans la base de données images selon l'invention; et
- la figure 5 représente un organigramme illustrant un exemple de traitement et d'analyse d'images stockées dans la base de données images selon l'invention.

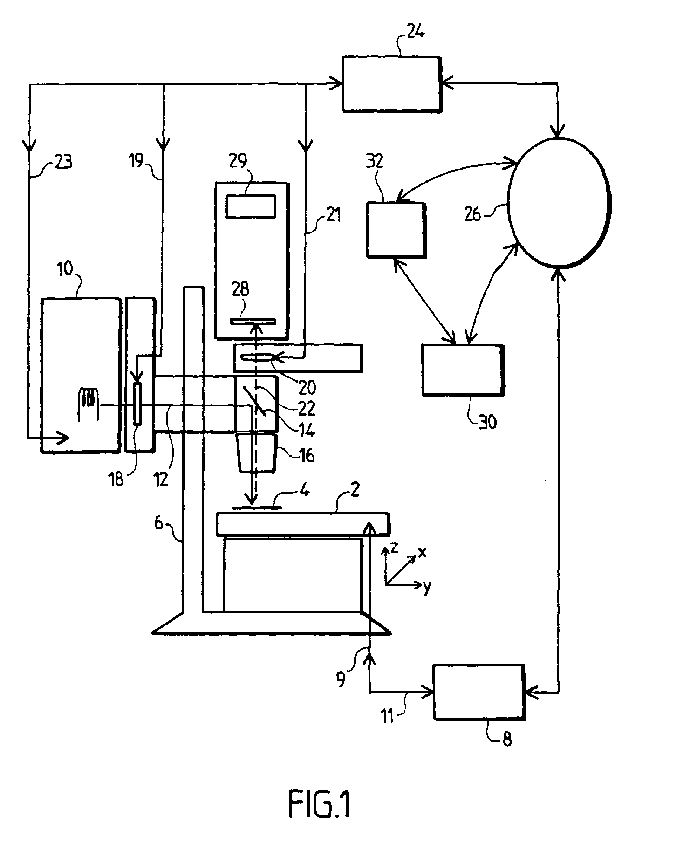

En référence à la figure 1, on a représenté un appareil d'imagerie par fluorescence auquel est associée une base de données images selon l'invention. Bien évidemment, la base données images selon l'invention peut être associée à tout autre type d'appareil d'imagerie, par exemple microscope optique (transmission, fond clair), mais aussi microscope électronique à balayage, microscope confocal, etc.

L'appareil d'imagerie de la figure 1 comprend un porte-échantillon 2 destiné à supporter un échantillon 4. Le porte-échantillon 2 est mobile, selon au moins deux directions orthogonales par rapport au plan de l'échantillon (directions X et Y). Le porte-échantillon 2 est supporté par un statif 6. Le porte-échantillon 2 est également réglable en hauteur (direction Z ou focus). Le porte-échantillon est, par exemple, une table motorisée à l'aide de deux moteurs, l'un par l'axe X et l'autre par l'axe Y. Une unité de commande 8 pilote le déplacement de la table motorisée 2 en envoyant des ordres choisis 9 et en recevant des réponses 11 auxdits ordres 9.

Une source lumineuse 10 est apte à générer un faisceau d'excitation 12 (pour la fluorescence) ou un faisceau d'illumination (pour l'observation en transmission). Le faisceau d'excitation 12 est acheminé sur l'échantillon 4 via des moyens de transport qui peuvent comprendre une optique spécifique de séparation 14 (miroir dichroïque) et une optique de grossissement 16 (objectif). Le miroir dichroïque 14 permet d'envoyer le rayonnement d'excitation 12 vers l'échantillon 4 et de laisser passer l'émission de fluorescence 22 vers l'oeil de l'observateur.

En règle générale, l'objectif 16 en fluorescence grandit de 10 à 100 fois.

La source lumineuse 10 est, par exemple, une lampe à arc à vapeur de mercure, une lampe arc de xénon, ou une lampe à halogène (à microscopie à transmission).

Des filtres d'excitation 18, disposés en aval de la source de rayonnement 10, permettent de choisir le rayonnement utile pour produire la fluorescence.

Des filtres d'arrêt 20, disposés entre l'échantillon 4 et l'oeil, éliminent les rayonnements réémis par l'échantillon 4 et n'intéressant pas le phénomène de fluorescence.

Du fait que les maxima des longueurs d'ondes du rayonnement d'excitation et de l'émission de la fluorescence sont proches l'un de l'autre (de l'ordre de la dizaine de nanomètres), le choix des filtres d'excitation et des filtres d'arrêt se révèle extrêmement délicat dans la pratique. Les moyens optiques d'observation sont généralement constitués d'un microscope spécialement adapté à la technique d'observation en fluorescence.

Le porte-échantillon 2 est susceptible de porter une pluralité d'échantillons. L'unité électronique de commande 8 est susceptible de déplacer ledit porte-échantillon sous un ou plusieurs objectifs de grandissement 16 divers et un oculaire. Le ou les objectifs 16 donnent de l'objet observé une image réelle tandis que l'oculaire fournit à l'oeil une image virtuelle grossie.

En pratique, les filtres d'excitation 18 et d'arrêt 20 sont portées par des roues mobiles en rotation. Une unité électronique de commande 24 envoie des ordres 19 et 21 vers les filtres d'excitation 18 et les filtres d'arrêt 20 afin de choisir le filtre correspondant au choix de l'utilisateur.

De même, l'unité électronique de commande 24 envoie des ordres 23 à la source lumineuse, selon des paramètres choisis, notamment concernant l'intensité de la lampe, et le réglage du diaphragme, (le cas échéant).

Les unités électroniques de commande 8 et 24 sont pilotées selon des programmes contenus dans un micro-ordinateur 26, dont le système d'exploitation est, par exemple, WINDOWS NT (marque déposée).

Les radiations d'émission de fluorescence 22 sont détectées par une caméra 28 à réseaux de détecteurs semi-conducteurs de type CCD. Les signaux détectés par la caméra 28 sont enregistrés dans des mémoires numériques 29 afin d'être traités par des programmes de traitement d'images, et stockés sur des mémoires magnétiques (non représentées) dans le micro-ordinateur 26. Les mémoires numériques peuvent être disposées dans des cartes spécifiques ou dans le micro-ordinateur. Les images sont par exemple stockées au format TIFF (Tagged image file format, pour format pour fichier d'image étiqueté).

La caméra 28 est de préférence à haute résolution, par exemple 1280 x 1024 pixels, avec une profondeur de mesure du signal par pixel d'au moins 10 bits (1024 niveaux), et à refroidissement par effet Peltier. Le capteur est du type interligne 2/3" . La vitesse de capture est par exemple de 7 images par seconde en haute résolution. La caméra 28 comprend une carte d'interface de type bus PCI, reliée au micro-ordinateur 26.

Les paramètres de la caméra, notamment gain, offset, et temps d'exposition sont réglables électroniquement. La caméra est capable de prendre une seule image ou bien une série d'images. Les images sont acheminées automatiquement, après acquisition, dans la table "image" de la base de données que l'on décrira plus en détail ci-après.

Selon l'invention, le micro-ordinateur 26 est capable de gérer une base de données images 30 stockant non seulement les images ainsi acquises mais surtout tous les paramètres relatifs aux conditions d'acquisition de ces images ainsi que postérieurement toutes les valeurs des paramètres et informations issus du traitement et de l'analyse de ces images. Le micro-ordinateur 26 comprend une unité de consultation 32 permettant d'interroger la base de données 30.

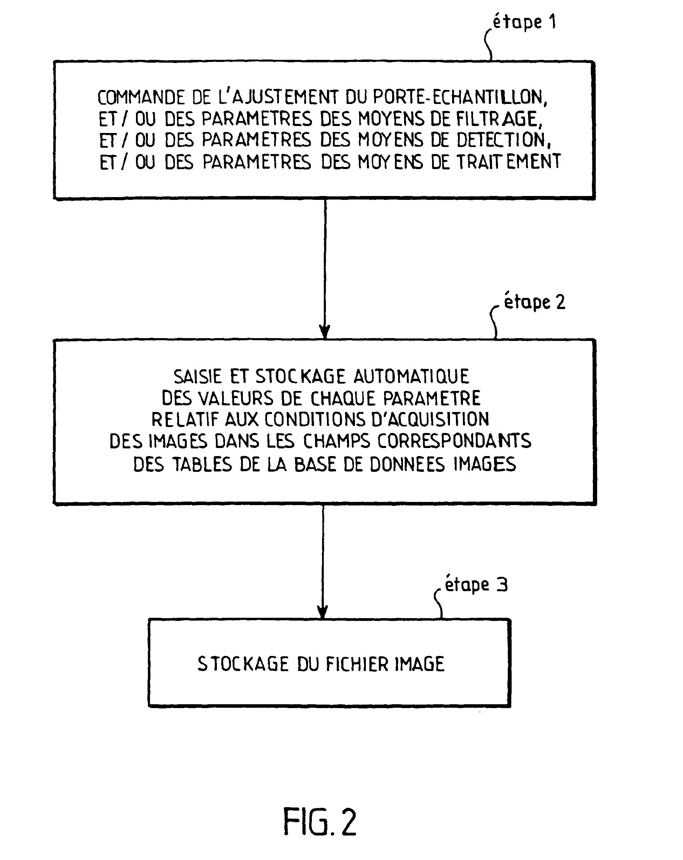

En référence à la figure 2, on a représenté un organigramme illustrant de façon générale l'acquisition d'une image avec l'appareil d'imagerie selon l'invention.

Comme décrit ci-avant, l'acquisition d'une image est précédée de la commande (étape 1) des éléments participant à l'acquisition de l'image. La commande concerne notamment l'ajustement du porte-échantillon, des moyens de filtrage, de la caméra, des moyens de traitement et/ou des moyens d'analyse quantitative.

Après acquisition de l'image, il est prévu de saisir les valeurs des paramètres liés à l'acquisition dans les tables de la base de données que l'on décrira plus en détail ci-après (étape 2). Par saisie, on entend ici l'opération automatique d'enregistrement des valeurs des paramètres ou bien encore la saisie manuelle de ces valeurs par un opérateur.

Le fichier image de l'image ainsi acquise est également stocké (étape 3).

En pratique, dans certaines applications, telle que celle appelée "capture à balayage 2D", le déplacement du porte-échantillon en X et Y permet l'examen successif d'une pluralité d'alvéoles contenant une préparation à observer, ou bien encore de la totalité d'une structure particulière constituant l'échantillon.

Dans d'autres applications, notamment en fluorescence, il est nécessaire de réaliser une capture multispectrale. Dans ce cas, la caméra examine successivement l'échantillon à travers les moyens d'observation optiques et à travers au moins deux filtres colorés ou sélectifs différents, choisis en fonction de la longueur d'onde du rayonnement lumineux qu'ils laissent passer soit pour la transmission à travers l'échantillon, soit pour les rayonnements issus de la fluorescence.

Les moyens de mémorisation 29 enregistrent les signaux électriques correspondant aux images colorées individuelles vues et enregistrées digitalement par la caméra. Des moyens restituent simultanément les signaux électriques à la sortie desdites mémoires et des moyens font varier le gain et le temps d'exposition de la caméra 28 de façon que l'amplitude des signaux de sortie de celle-ci soit toujours supérieure à un seuil prédéterminé, et tienne compte, en les corrigeant, des signaux non représentatifs (bruit).

Dans le cas d'immunofluorescence, il est généralement suffisant de n'utiliser que deux images colorées différentes, à savoir une image rouge et une image verte. Cependant, dans certains cas, il peut être avantageux d'utiliser une troisième image, bleue par exemple.

Il convient de remarquer que les roues porte-filtres comprennent chacune un disque pourvu de 8 filtres colorés mis en rotation de façon à amener successivement les filtres dans une position perpendiculaire au faisceau lumineux. Un tel disque est entraîné par un moteur, par exemple de type pas à pas, dont le fonctionnement est bien entendu synchronisé avec le reste de l'appareil selon l'invention et notamment la mise en mémoire des signaux correspondant aux images colorées individuelles. Pour assurer au moins en partie une telle synchronisation, il est avantageux de prévoir des capteurs fixes, par exemple optoélectroniques et/ou magnétiques, coopérant avec des repères dudit disque.

L'appareil d'imagerie selon l'invention est apte à acquérir automatiquement des images selon plusieurs modes ou protocoles d'acquisition.

L'un des protocoles consiste à acquérir automatiquement une série d'images du même échantillon. Le porte-échantillon est déplacé selon des mouvements choisis en X et Y. Ce protocole est appelé "capture à balayage 2D". Plus précisément, avec ce protocole, on peut balayer de façon systématique, selon les axes X et Y, l'ensemble d'un échantillon à fort grandissement (par exemple au x40 ou au x100). L'observation peut aussi être réalisée à l'intérieur d'une région d'un échantillon dont la position et la surface sont définies graphiquement par l'utilisateur à l'issu d'un dialogue avec les moyens de traitement, ou préprogrammée à l'aide d'un algorithme faisant usage de connaissance a priori sur la structure spatiale de l'échantillon.

Un autre protocole peut inclure le contrôle des déplacements selon l'axe Z. Ce protocole consiste ainsi à acquérir plusieurs plans ou coupes du même échantillon (pile en Z). Ce protocole est appelé "capture 3D multicouches". Plus précisément, avec ce protocole, on peut acquérir une pile de plusieurs coupes d'un échantillon biologique d'une certaine épaisseur, la même scène ou partie d'échantillon étant observée et capturée dans les différents plans ou différentes positions du porte-échantillon selon la direction Z (exprimées à la précision du centième de microns), correspondant à la mise au point focal, réalisé par logiciel. Cette fonction est particulièrement intéressante pour l'identification et la mesure d'objets (sonde ADN) de très petite taille se trouvant à différents niveaux dans l'épaisseur d'un échantillon dans différentes conditions de lumière d'observation.

Encore un autre protocole consiste à acquérir un ensemble d'images de la même scène ou partie de l'échantillon en utilisant différentes lumières d'excitation ou de fluorescence, ou encore différentes couleurs de visualisation (rouge, vert, bleu) correspondant aux différents filtres d'excitation et d'arrêt. Ce protocole est appelé "capture multispectrale".

Encore un autre protocole consiste à acquérir des images selon différentes configurations ou modalités d'acquisition, par exemple fluorescence, fond clair, transmission). Ce mode est appelé multi-modal. A l'issue de ce mode, l'utilisateur peut fusionner les images résultantes pour un traitement et une interprétation ultérieure.

On peut aussi contrôler les temps de prise des images ainsi que les réglages de l'électronique de capture. Par exemple, on acquiert une série temporelle d'images, c'est-à-dire acquises pendant un temps total déterminé, à intervalle de temps paramètrable.

De plus, l'utilisateur peut combiner plusieurs protocoles selon l'application envisagée. Ces protocoles d'acquisition peuvent en outre être enrichis de la mise au point automatique en transmission et/ou en fluorescence, du positionnement d'un obturateur de lumière pour protéger l'échantillon, et du traitement d'images en ligne (pendant la capture).

Toutes les images ainsi acquises peuvent être stockées dans la base de données images que l'on décrira plus en détail ci-après. Ces images ainsi stockées sont avantageusement susceptibles d'être traitées, rechargées, combinées par sous-ensembles d'images.

Par exemple, il est possible de réaliser différentes fonctions de façon totalement automatisée lors de protocoles d'acquisition programmés. L'utilisateur peut aussi créer des protocoles permettant de combiner les fonctions décrites ci-avant. Par exemple, l'utilisateur peut sélectionner des modes automatiques de séries temporelles et de séries multi-spectral, pour réaliser en mode automatique, des mesures des variations au cours du temps des concentrations d'ions, tels que Calcium, Hydrogène, Sodium, Chlore,..., à l'intérieur de cellules, en particulier lors de leur excitation par des drogues ou par des signaux électriques.

De même, en sélectionnant les modes de série multi-plans en Z, et de balayage de régions en X et Y, on peut réaliser en automatisation des études d'imagerie en volume (tridimensionnelle) à très haute définition spatiale. La combinaison de ces modes avec le mode multi-spectral permet d'ajouter la dimension spectrale aux séries d'images obtenues automatiquement (mise au point de procédés de développement de médicaments ou contrôle de qualité de production de solutions biologiques industrielles).

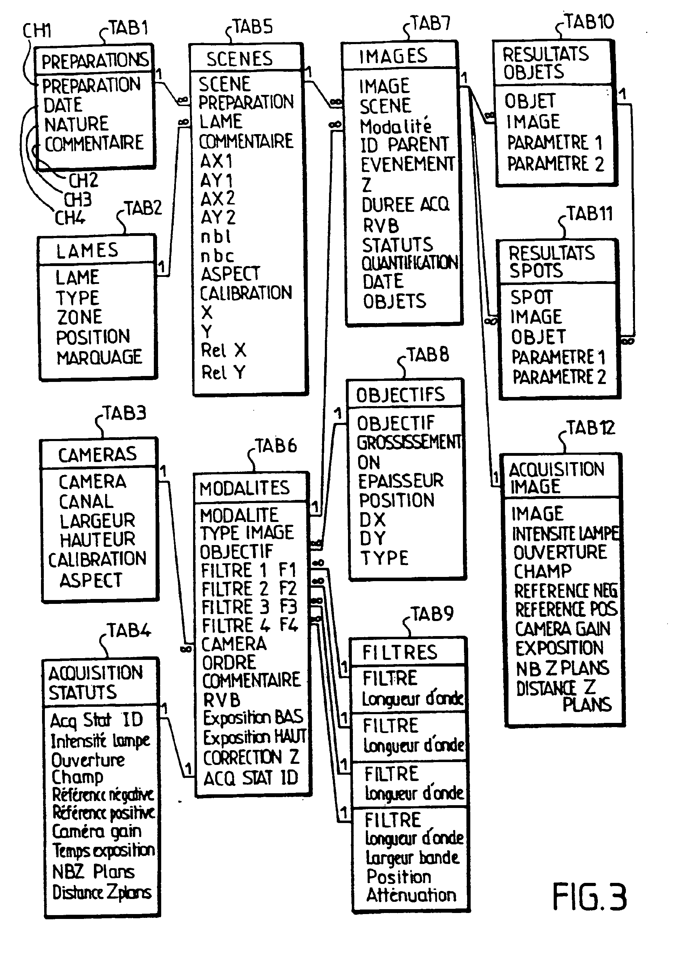

En référence à la figure 3, la base de données d'images selon l'invention comprend une pluralité de tables de paramètres TAB, individualisées en TAB1 à TAB12. Chaque table comprend une liste de paramètres ou champs relatifs au moins au déplacement du porte-échantillon, aux moyens de filtrage d'excitation et d'arrêt, aux moyens de traitement des signaux détectés par la caméra CCD, et/ou à l'identification de l'échantillon.

La table TAB1 "préparations" est relative aux préparations liées à l'application.

En pratique, la table TAB1 "préparations" comprend quatre champs CH individualisés en CH1 à CH4. Le champ CH1 est relatif au nom de la préparation. Le champ CH2 est relatif à la date de la préparation. Le champ CH3 est relatif à la nature de la préparation. Le champ CH4 est destiné à recevoir une description de la préparation.

La table TAB2 "lames" est relative aux lames.

En pratique, la table TAB2 comprend cinq champs. Le premier champ est relatif au nom de la lame. Le second champ est relatif au type de la structure de la lame, par exemple une matrice de 8 x 3 alvéoles. Le troisième champ est relatif à la région ou zone de l'échantillon à observer. Le quatrième champ est relatif à la position de la lame à analyser dans la liste des positions X, Y et Z de ladite lame. Le cinquième champ est relatif aux repères de mises au point (focus).

La table TAB3 "caméras" est relative aux moyens de détection. Cette table comprend six champs. Le premier champ est relatif au nom de la caméra. Le second champ est relatif au canal de connexion de la caméra au micro-ordinateur afin d'assurer la capture des images. Les trois à sixième champs sont relatifs à la géométrie (taille, nombre de pixels, etc) de la matrice CCD de la caméra.

La table TAB4 "acquisition statuts" est relative aux statuts d'acquisition des images. Elle comprend dix champs. Le premier champ est relatif à l'identification du champ acquisition. Le second champ correspond au paramètre relatif à l'intensité de la lampe. le troisième champ correspond à l'ouverture du diaphragme de la lampe. Les quatrième et cinquième champs sont relatifs aux références négative et positive du canal de connexion de la caméra au micro-ordinateur. Le septième champ est relatif au gain de la caméra. Le huitième champ est relatif au temps d'exposition de la caméra. Le neuvième champ est relatif au nombre de couches en Z destinées à être acquises, fusionnées et/ou traitées. Enfin, le dixième champ est relatif à la distance entre les différentes couches, la distance étant exprimée en micromètres.

La table TAB5 "scènes" est relative aux scènes. Cette table comprend seize champs.

Le premier champ comprend le numéro d'identification unique de la scène. Le deuxième champ est relatif au nom de la préparation. Ce champ est relié au champ "préparation" de la table TAB1. La relation de la table TAB1 à TAB5 est de type un à plusieurs, c'est-à-dire qu'une préparation peut avoir plusieurs scènes. Le troisième champ est relatif au nom de la lame. Ce champ est relié au champ "lame" de la table TAB2. La relation TAB2 vers TAB5 est de type un à plusieurs. Le quatrième champ est destiné à des commentaires. Les cinquième, sixième, septième et huitième champs sont destinés à la position de la scène dans la mosaïque représentant l'ensemble des scènes. Si la mosaïque des scènes n'est pas référencée en système métrique, les neuvième et dixième champs sont relatifs aux nombres, exprimés en lignes et en colonnes référençant la scène dans la mosaïque. Les onzième et douzième champs sont destinés à l'aspect ainsi qu'à la calibration d'images. Cet aspect peut correspondre à la hauteur du pixel divisé par sa largeur. Pour les images en système métrique, la largeur du pixel est indiquée en micromètres. Enfin, les quatre derniers champs sont relatifs à des positions absolues et relatives en X et Y.

La table TAB6 "modalités" est relative aux modalités d'acquisition. Elle comprend 15 champs.

Le premier champ est relatif au nom de la modalité d'acquisition.

Le deuxième champ est relatif au type d'imagerie dans lequel se fait l'observation de l'échantillon (fluorescence, transmission, fond clair).

Le troisième champ est relatif à l'objectif. Ce champ est relié à la table TAB8 que l'on décrira ci-après. La relation TAB6 vers TAB8 est de type plusieurs à un.

Les quatre à septième champs sont relatifs au nom des filtres reliés à la table relative aux filtres TAB9 que l'on décrira plus en détail ci-après. Les champs filtres sont reliés par des relations plusieurs à un.

Le huitième champ est relatif au nom de la caméra. Ce champ est relié à la table TAB3 selon une relation TAB6 vers TAB3 de type plusieurs à un.

Le neuvième champ correspond à l'ordre chronologique de l'acquisition (par exemple filtre bleu avant filtre rouge).

Le dixième champ est un champ réservé aux commentaires.

Les coefficients permettant l'équilibre entre les couleurs (rouge, vert et bleu) sont regroupés dans le onzième champ.

Les limites d'exposition de la caméra sont exprimées dans les douzième et treizième champs : exposition niveau bas, exposition niveau haut.

Un facteur de correction en Z pour corriger les décalages dus aux aberrations chromatiques et à la focalisation est prévu dans le quatorzième champ.

Enfin, un champ "acquisition" est prévu. Ce champ est relié selon une relation un à un avec la table TAB4 et le champ correspondant.

La table TAB7 "images" est relative aux images ainsi acquises selon l'invention. Elle comprend par exemple douze champs.

Le premier champ est le numéro d'identification alphanumérique de l'image. Ce champ correspond au nom du fichier image.

Le champ numéro deux correspond au numéro d'identification de la scène. Ce champ est relié au champ scène de la table TAB5 selon une relation plusieurs à un dans le sens TAB7 vers TAB5.

Le champ numéro 3 correspond au nom de la modalité. Ce champ est relié au champ modalité correspondant de la table TAB6 selon une relation plusieurs à un dans le sens TAB7 vers TAB6.

Un numéro d'identification de l'image parente est prévu pour les images filles (champ n°4) à l'issue d'un traitement choisi sur la ou les images parentes.

Un champ "événement" (champ n°5) est destiné à recevoir les informations enregistrées lors de l'acquisition des images.

Les coordonnées en Z sont stockées dans le champ "Z" (champ n°6). La durée d'acquisition ou le temps relatif de la capture d'images en secondes est destinée à être stockée dans le champ n°7. Les coefficients d'équilibre des couleurs (rouge, vert et bleu) sont stockés dans le champ n°8.

L'état des objets définis dans les images (masques, étiquettes) sont identifiés dans le champ statut (champ n°9). Le champ quantification est prévu (champ n°10). La date de création ou d'acquisition d'images est prévue également (champ n°11) ainsi qu'un dernier champ (champ n°12) relatif aux objets de l'image (masques, étiquettes, etc...).

La table TAB8 est relative aux objectifs utilisés par l'appareil d'imagerie. Elle comprend huit champs. Le champ n° 1 correspond au nom de l'objectif. Le champ n°2 est relatif au facteur de grossissement. Le champ n° 3 est relatif à l'ouverture numérique de l'objectif. L'épaisseur du plan focal est indiquée dans le champ n°4. La position de l'objectif dans la tourelle est exprimée dans le champ n°5. Le décalage en X et en Y par rapport à l'axe optique est prévu dans les champs n°6 et n°7. Enfin, le champ n°8 est relatif au type de l'objectif (sec, huile, eau).

La table TAB9 correspond à la table des filtres. On retrouve dans cette table le nom du filtre, le centre de la bande de transmission, la largeur de la bande de transmission en nanomètres, la position du filtre dans la roue. Le facteur d'atténuation est aussi indiqué avec un facteur égal à un pour une transparence totale et un facteur égal à zéro pour une obturation totale.

La table TAB12 "acquisition image" est sensiblement identique à la table TAB4. Elle comprend en outre le champ "image" (champ n°1) qui est relié selon une relation un à un avec le champ "image" de la table TAB7. La table TAB12 décrit aussi les réglages électroniques et mécaniques des différends dispositifs participant à l'acquisition de l'image à l'instant de ladite acquisition. Cette table est utile car elle regroupe les champs principaux relatifs aux conditions d'acquisition des images. A l'aide de cette table, l'utilisateur peut facilement sélectionner et afficher une image selon les critères d'acquisition.

Les tables TAB10 et TAB11 sont relatives aux résultats. On distingue pour chaque image, un jeu d'objets ou de zones d'intérêt (par exemple cellules, chromosomes, particules).

La table TAB10 s'appelle "résultats-objets". Elle contient trois champs. Le premier champ est relatif aux objets de l'image. Le second champ est relatif au champ "image". Ce champ est relié au champ "image" de la table TAB7 selon une relation plusieurs à un dans le sens TAB10 vers TAB7. Le troisième champ et les suivants sont relatifs aux paramètres spécifiques (surface, périmètre, intensité de fluorescence) de chaque objet.

Sur chaque objet, il est possible d'observer en outre des zones d'intérêt ou spots de dimensions encore plus petites que lesdits objets. La table TAB11 qui s'appelle "résultats-spots" sert justement à contenir des informations sur ces zones d'intérêt.

La table TAB11 comprend quatre champs. Le champ "spot" est relatif à une zone d'intérêt d'un objet (par exemple grain d'argent en hybridation in situ, point fluorescent). Le champ "image" est relié au champ "image" de la table TAB7 selon une relation un à plusieurs. Le troisième champ est relatif aux objets. Ce champ est relié est relié au champ "objets" de la table TAB10 selon une relation un à plusieurs dans le sens TAB10 vers TAB11. Enfin, les derniers champs sont relatifs aux paramètres spécifiques du spot.

L'innovation réside notamment ici dans le fait de disposer de plusieurs tables contenant chacune des champs relatifs à l'acquisition des images, à l'identification de l'échantillon ainsi qu'au traitement et à l'analyse des données liées et/ou issues et/ou extraites de ces images.

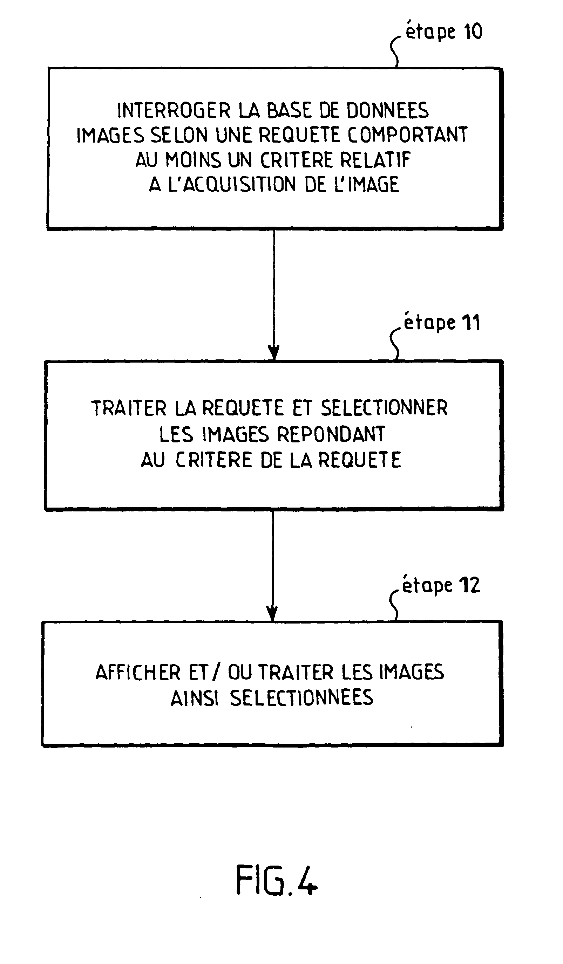

En référence à la figure 4, il est possible d'interroger la base de données 30 selon des requêtes contenant des critères correspondant à au moins un paramètre d'acquisition (étape 10), à sélectionner les images répondant auxdits critères (étape 11), et afficher et/ou traiter lesdites images ainsi sélectionnées (étape 12).

D'une façon générale une requête permet de chercher, trier, et de récupérer des données spécifiques. La requête sélectionne un ensemble d'enregistrements satisfaisants les critères définis par l'utilisateur. Le résultat de la requête constitue une feuille de réponse dynamique.

Par exemple, la requête peut comprendre des critères relatifs à l'identification de l'échantillon, (ici avec les champs des tables "préparations", "lames" et "scènes"), et aux conditions d'acquisition des images (ici avec les champs des tables "acquisition statuts", "modalités", "objectifs", "filtres", "acquisition image". La sélection peut aussi se réaliser à l'aide de la table "images".

Bien évidemment, la base de données 30 peut être mise à jour à l'aide de formulaires. Ces formulaires permettent aussi de consulter et d'ajouter des données dans les tables multiples dans une mise en forme qui peut être personnalisée.

Des états de sortie permettent de présenter les informations sous forme écrite ou affichage sur la console de consultation.

La requête peut aussi requérir un traitement particulier des images brutes ainsi acquises. Par exemple, la requête peut consister à mesurer et visualiser le niveau d'intensité en fluorescence verte à l'intérieur d'objets tels que reconnus dans une image obtenue par exemple avec un filtre bleu. En réponse à cette requête, l'unité de consultation interroge la base de données, qui trouve alors l'image verte correspondante, grâce aux paramètres d'acquisition des images (image, scène, positions X et Y, filtre, caméra, temps d'exposition, etc).

Le traitement d'image approprié (ici calcul de niveau d'intensité) est appliqué aux objets de l'image verte ainsi sélectionnée. Le résultat du calcul est délivré sur l'unité de consultation.

La table de résultat peut aussi être interactive. Ainsi, avec le clic d'une souris informatique sur une valeur choisie d'un champ de la table, on permet à l'utilisateur de surligner une région choisie de l'image et le clic de la souris sur un événement de l'image permet de surligner l'entrée correspondante (ou champ) de la table.

Inversement, les paramètres (ou champs) des tables TAB10, TAB11, et TAB12 ainsi que de la table "images" TAB7" (notamment les champs "X", "Y", "Z", "modalité d'acquisition", "temps d'acquisition", etc) permettent de retrouver la ou les images correspondant à ces paramètres dans la base de données et de les afficher.

Il convient de remarquer que la structure de la base de données selon l'invention permet d'améliorer l'analyse des images en terme de souplesse d'utilisation et de richesse de traitement.

Par exemple, la base de donnée selon l'invention peut être utilisée dans une procédure d'imagerie destinée à détecter et mesurer les amplifications (nombre de copies) et les délétions (suppressions) de séquences ADN dans des chromosomes de cellules tumorales (cancéreuses) par comparaison aux mêmes chromosomes de cellules normales. Cette procédure, appelée "CGH" pour "Comparaison Génomique après Hybridation", est un test fournissant des informations uniques pour l'aide à l'interprétation et au diagnostic de tumeurs cancéreuses.

L'affichage des profils (niveau d'intensité en fluorescence) peut aussi être interactif. Un utilisateur peut ainsi surligner des pixels choisis dans une image. De même, des images issues d'un traitement particulier (par exemple normalisation) peuvent aussi être ajoutées dans la base de données. Ces images peuvent avantageusement être affichées selon une palette de couleurs appropriée afin de faciliter l'interprétation. De même des calculs ou seuillages peuvent être réalisés sur les images à l'aide d'un tableur ou autre outil d'analyse et d'interprétation statistique.

La procédure automatique d'analyse des données et l'utilisation de la base de données selon l'invention trouve une application particulière en microscopie de fluorescence à fort grossissement. Dans cette application, le protocole d'acquisition implique le balayage systématique en X-Y, l'autofocus pour chaque région d'échantillon observée et la fonction automatique multi-couleurs, en l'occurrence de trois filtres sélectifs de lumière en excitation et en émission bleu, rouge et vert.

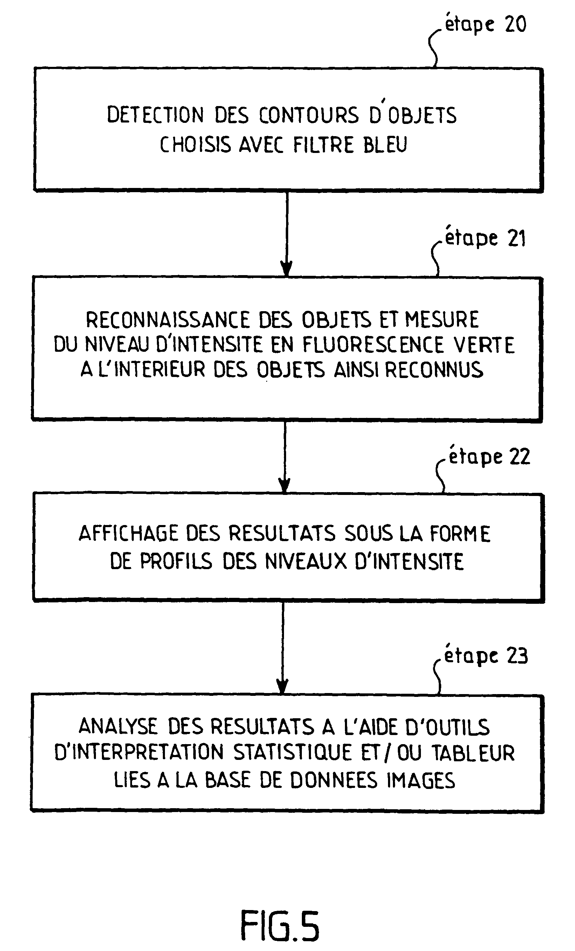

Par exemple (figure 5), les images obtenues en modalité bleue (étape 20) contiennent l'information ou représentent les chromosomes présents dans chacune des cellules observées. Un premier algorithme d'analyse, apte à combiner la forme des objets et la densité de leur coloration en bleu, permet de détecter les contours de ces objets. En sortie de cette étape de détection de contours, une image binaire (contenant des 0 ou 1 en chaque point) est générée, appelée masque des objets (chromosomes, dans cet exemple).

Un deuxième algorithme de reconnaissance (ou de caractérisation de forme) permet (étape 21), par exemple, la localisation précise des "centromères" de chaque chromosome détecté et leur classification par comparaison à une base de données de référence conduisant à la génération d'une image d'un type particulier appelé caryotype, où l'ensemble des chromosomes de la cellule observée sont représentés selon leur appariement et leur appartenance à une classe définie par convention dans la base de référence.

En pratique, pour chacune des cellules observées, les images obtenues en vert et en rouge sont automatiquement normalisées selon une méthode faisant elle-même appel à la structure intégrée de la base de données. Le niveau du fond est évalué par deux techniques alternatives, soit comme la valeur du mode de l'histogramme de distribution de l'intensité dans l'image à l'extérieur des contours des chromosomes tels que détectés selon le premier algorithme d'analyse, soit comme la valeur calculée dans la proximité immédiate (voisinage) après un filtre numérique de type "chapeau haut de forme". Ces deux valeurs de fond vert et de fond rouge sont respectivement soustraites des images verte et rouge. Enfin, pour chaque cellule observée et à l'intérieur du contour de chaque chromosome, on calcule point par point la valeur du rapport normalisé des intensités mesurées.

Lors de ces étapes 20 et 21, de nombreuses requêtes sont faites à la base de données images selon l'invention. Ces requêtes sont formulées en utilisant les champs des tables TAB décrites en référence à la figure 3.

Par exemple, la sélection au moins des champs "image", "scène", "modalité" de la table TAB7 et du champ "filtre 1" de la table TAB6 permet d'identifier, sélectionner et afficher une image d'une zone d'un échantillon obtenue en modalité bleue. La sélection du champ "filtre 2" de la table TAB6 permet d'identifier, sélectionner et afficher l'image de la même scène obtenue en modalité rouge. De même, la sélection du champ "filtre 3" de la table TAB6 permet d'identifier, sélectionner et afficher l'image de la même scène obtenue en modalité verte.

La structure de la base de données permet en outre de rendre l'ensemble de la procédure automatique non seulement possible mais particulièrement performante. En particulier, le fait de retrouver rapidement pour chaque cellule observée, l'image de coloration bleue avec le masque (image binaire) de certains objets d'intérêt (chromosomes) et toutes les images associées à cette même cellule (ou plus généralement scènes ou parties d'échantillon) observée, en l'occurrence les images verte et rouge, respectivement représentatives du marquage de l'ADN normal et tumoral. De même l'image du rapport des images précédentes, est elle-même intégrée dans la base de données de cette étude particulière. Cette image du rapport des images précédentes est aisément analysable, susceptible d'être archivée, référencée et transmise, etc, à l'aide des outils de gestion de cette base de données images.

Par exemple, les axes des chromosomes peuvent être calculés automatiquement et utilisés dans une fonction de génération et représentation des profils de l'intensité de fluorescence pour chaque chromosome observé en lumière verte et rouge. La structure de ces objets dans la base de données permet une fonction unique de représentation de liens visuels sur un même écran de travail entre la position et la valeur sur un profil de chromosome et la position sur l'image du chromosome lui-même.

De même, après leur normalisation et leur représentation dans un code de couleurs adapté à l'interprétation des valeurs des rapports, les images obtenues, pour chaque cellule ou partie d'échantillon observé, peuvent être soumises à des algorithmes de détection de région de localisation des amplifications et des délétions.

A l'issue de cette détection automatique, un tableau de résultat est créé, intégré à la base de données, et affiché (étape 22). Ce tableau contient par exemple pour chacune des régions, la classe du chromosome sur lequel elle se trouve, sa position précise définie par rapport au centromère et à la longueur du chromosome, sa surface, les valeurs statistiquement significatives de l'intensité de la couleur en vert et rouge et du rapport de ces valeurs.

Le tableau de résultats (étape 23) est lui-même représenté à l'écran de l'unité de consultation avec des fonctions graphiques de dialogue permettant une interactivité (rendue très aisée par l'utilisation de la souris et/ou du clavier) entre les différents champs des tables de la base de données images (image, objet détecté par analyse de ces images, valeur correspondante en ligne et en colonne dans le tableur). Des outils d'analyse et d'interprétation statistique permettent d'analyser ces tableaux de résultats de façon performante et interactive.

## Revendications

1. Appareil d'imagerie du type comprenant:
- un porte-échantillon (2) ajustable en X et Y;
- un dispositif d'illumination, comprenant une source lumineuse (10) propre à générer un faisceau d'illumination (12) à large bande spectrale,
- des premiers moyens optiques de transport (14, 16) propres à acheminer ledit faisceau d'illumination (12) sur un échantillon (4) disposé sur le porte-échantillon (2);
- un dispositif de réception, comprenant des seconds moyens optiques de transport (16, 14) propres à acheminer les rayonnements (22) émis et/ou transmis par l'échantillon ainsi illuminé,
- des moyens de détection (28) montés à la sortie du dispositif de réception,
- les premiers et/ou seconds moyens de transport comprenant des moyens de filtrage ajustables (18, 20);
- des moyens de traitement (26) pour traiter les signaux détectés par les moyens de détection (28) afin d'acquérir une image correspondante d'au moins une zone choisie de l'échantillon;
- une unité de commande (24, 8) propre à piloter l'ajustement du porte-échantillon, les paramètres des moyens de filtrage (18,20), les paramètres des moyens de traitement (26) et les paramètres du dispositif d'illumination selon une pluralité de modes d'acquisition d'images,
- une base de données images (30), liée aux moyens de traitement, et propre à contenir les images ainsi acquises,
**caractérisé en ce que**
- le porte-échantillon (2) est en outre ajustable en Z,
- chaque acquisition d'image comprend une commande d'au moins un élément parmi le déplacement du porte-échantillon, les paramètres des moyens de filtrage, les paramètres des moyens de traitement, et les paramètres du dispositif d'illumination,
- les moyens de stockage sont agencés pour stocker les images acquises elles-même et pour maintenir une correspondance entre chaque image acquise et les valeurs de chacun de ses paramètres d'acquisition,
- la base de données images (30) comprend une pluralité de tables (TAB) comprenant chacune des champs relatifs au moins aux conditions d'acquisition des images, et à l'identification de l'échantillon, les tables étant reliées les unes aux autres selon des relations choisies;
- l'appareil d'imagerie comprend en outre une unité de consultation pour interroger la base de données images selon au moins une requête contenant au moins un critère correspondant à au moins un paramètre d'acquisition, pour sélectionner les images répondant audit critère et pour afficher et/ou traiter lesdites images ainsi sélectionnées.

2. Appareil selon la revendication 1, **caractérisé en ce qu'**il comprend en outre des moyens de traitement et d'analyse conjointe des images acquises, de leurs critères d'acquisition, ainsi que de données liées et/ou extraites des images acquises.

3. Appareil selon la revendication 2, **caractérisé en ce que** les moyens de traitement et d'analyse comprennent des fonctions de traitement du groupe suivant : traitement de type contraste, filtrage linéaire, opérations de morphologie mathématique, segmentation.

4. Appareil selon l'une des revendications 2 et 3, **caractérisé en ce que** les moyens de traitement et d'analyse comprennent des fonctions d'analyse du groupe suivant : analyse de type caractérisation de forme, de densité, de texture, de topologie et d'organisation spatiale.

5. Appareil selon l'une des revendications 2 à 4, **caractérisé en ce que** les moyens de traitement et d'analyse comprennent des fonctions de classification de données tirées des images, du groupe suivant : tableur, outil d'analyse et d'interprétation statistique.

6. Appareil selon l'une des revendications 1 à 4, **caractérisé en ce que** les paramètres relatifs aux conditions d'acquisition des images appartiennent au groupe suivant :
- coordonnées en X, Y, ou Z du porte-échantillon (2);
- conditions temporelles de l'acquisition des images;
- conditions de fonctionnement de la source lumineuse (10);
- la longueur d'onde, la largeur de bande, le facteur d'atténuation, la position des moyens de filtrage (18 et 20);
- nature et paramètres de fonctionnement des éléments constitutifs des premiers et seconds moyens de transport (14, 16);
- paramètres de fonctionnement des moyens de détection (28), et
- paramètres de fonctionnement des moyens de traitement (26).

7. Appareil selon l'une des revendications précédentes, **caractérisé en ce que** la base de données images (30) comprend une table d'images acquises (TAB7), ayant un champ ("SCENE") de liaison avec au moins une table (TAB5) relative à une scène, dans laquelle se trouve prise l'image, un champ ("Modalité") de liaison avec au moins une table (TAB6) relative aux modalités de prise de vue, et un champ ("image") pour au moins une liaison avec au moins une table de résultats (TAB10, TAB11) relative à des élément d'images dits résultats.

8. Appareil selon la revendication 7, **caractérisé en ce que** la base de données images (30) comprend plusieurs tables de résultats (TAB10, TAB11), susceptibles d'être reliées à la table d'images acquises, et relatives à des parties d'images ainsi qu'à des objets repérés dans l'image.

9. Appareil selon l'une des revendications 7 et 8, **caractérisé en ce qu'**au moins certaines tables sont reliées entre elles selon des relations de type un à plusieurs, un à un, et/ou plusieurs à un.

10. Appareil selon l'une des revendications 7 à 9, **caractérisée en ce que** la base de données est de type relationnelle, intégrée et polyvalente.

## Claims

1. Imaging apparatus of the type comprising:
- a sample carrier (2) adjustable in X and Y;
- a lighting device, comprising a light source (10) capable of generating a light beam (12) with a large spectral band,
- first optical transport means (14, 16) capable of transporting the light beam (12) on to a sample (4) disposed on the sample carrier (2);
- a receiving device, comprising second optical transport means (16, 14) capable of transporting the rays (22) emitted and/or transmitted by the sample thus illuminated,
- detection means (28) mounted at the output of the receiving device,
- first and/or second transport means comprising adjustable filtering means (18, 20);
- processing means (26) for processing the signals detected by the detection means (28) in order to acquire a corresponding image of at least one selected zone of the sample;
- a control unit (24, 8) capable of monitoring the adjustment of the sample carrier, the parameters of the filtering means (18, 20), the parameters of the processing means (26) and the parameters of the lighting device according to a plurality of image acquisition modes,
- an image database (30) connected to the processing means and capable of containing the images so acquired,
**characterised in that**
- the sample carrier (2) is further adjustable in Z,
- each image acquisition comprises a command of at least one element from among the displacement of the sample carrier, the parameters of the filtering means, the parameters of the processing means, and the parameters of the lighting device,
- storage means are contrived to store the images acquired themselves and in order to maintain a correspondence between each image acquired and the values of each of its acquisition parameters,
- the image database (30) comprises a plurality of tables (TAB) each comprising fields relating to at least the acquisition conditions of the images, and to the identification of the sample, the tables being interconnected according to selected relations;
- the imaging apparatus further comprises a consultation unit for interrogating the image database according to at least one request containing at least one criterion corresponding to at least acquisition parameter in order to select the images responding to the criterion and in order to display and/or process the images so selected.

2. Apparatus according to claim 1, **characterised in that** it further comprises means for the combined processing and analysis of the images acquired, of their acquisition criteria, as well as of data connected and/or extracted from the images acquired.

3. Apparatus according to claim 2, **characterised in that** the processing and analysis means comprise processing functions of the following group: processing of the type for contrast, linear filtering, mathematical morphology operations, and segmentation.

4. Apparatus according to either of claims 2 or 3, **characterised in that** the processing and analysis means comprise analysis functions of the following group: analysis of the type for characterisation of shape, of density, of texture, of topology and spatial organisation.

5. Apparatus according to one of claims 2 to 4, **characterised in that** the processing and analysis means comprise functions of classification of data drawn from the images, from the following group: spreadsheet, analysis and statistical interpretation tool.

6. Apparatus according to one of claims 1 to 4, **characterised in that** the parameters relating to the acquisition conditions of the images belong to the following group:
- X, Y or Z coordinates of the sample carrier (2);
- time conditions of the acquisition of the images;
- functioning conditions of the light source (10);
- wavelength, band width, attenuation factor, position of the filtering means (18 and 20);
- type and functioning parameters of the constituent elements of the first and second transport means (14, 16);
- functioning parameters of the detection means (28), and
- functioning parameters of the processing means (26).

7. Apparatus according to one of the preceding claims, **characterised in that** the image database (30) comprises a table of images acquired (TAB7), having a field ("SCENE") as a link to at least one table (TAB5) relating to a scene in which the image is taken, a field ("modality") as a link to at least one table (TAB6) relating to the modalities of the shot, and a field ("image") for at least one link to at least one table of results (TAB10, TAB11) relating to elements of images known as results.

8. Apparatus according to claim 7, **characterised in that** the image database (30) comprises plural tables of results (TAB10, TAB11) capable of being connected to the table of images acquired and relating to parts of images as well as to objects plotted in the image.

9. Apparatus according to either of claims 7 or 8, **characterised in that** at least some tables are interconnected according to relations of the type one to several, one to one, and/or several to one.

10. Apparatus according to one of claims 7 to 9, **characterised in that** the database is of the relational, integrated and polyvalent type.

## Patentansprüche

1. Bildgebungsvorrichtung vom Typ der aufweist:
- einen Musterträger (2), der in X- und Y-Richtung einstellbar ist;
- eine Beleuchtungsvorrichtung, die eine Lichtquelle (10) aufweist, die in der Lage ist, ein Lichtbündel (12) mit breitem Spektralband zu erzeugen;
- erste optische Transporteinrichtungen (14, 16), die in der Lage sind, das Beleuchtungsbündel (12) auf ein Muster (4) zu leiten, das auf dem Musterträger (2) angeordnet ist;
- eine Aufnahmevorrichtung, die zweite optische Transporteinrichtungen (16, 14) aufweist, die in der Lage sind, die emittierten und/oder von dem so beleuchteten Muster übertragenen Strahlungen (22), zu leiten,
- Erfassungseinrichtungen (28), die am Ausgang der Aufnahmevorrichtung angebracht sind;
- wobei die ersten und/oder zweiten Transporteinrichtungen einstellbare Filtereinrichtungen (18, 20) aufweisen;
- Bearbeitungseinrichtungen (26), um die von den Erfassungseinichtungen (28) erfassten Signale zu verarbeiten, um ein Bild zu erzeugen, das wenigstens einer ausgewählten Zone des Musters entspricht;
- eine Steuereinheit (24, 8) die in der Lage ist, die Einstellung des Musterträgers, die Parameter der Filtereinrichtungen (18, 20), die Parameter der Verarbeitungseinrichtung (26) und die Parameter der Beleuchtungsvorrichtung gemäß einer Mehrzahl von Bilderfassungsmodi zu steuern,
- eine Bilddatenbank (30), die mit den Verarbeitungseinrichtungen verbunden ist, und in der Lage ist, die so erfassten Bilder zu enthalten,
**dadurch gekennzeichnet, dass**
- der Musterträger (2) außerdem in Z einstellbar ist ,
- jede Bilderfassung eine Steuerung wenigstens eines Elements unter der Bewegung des Musterträgers, den Parametern der Filtereinrichtungen, den Parametern der Verarbeitungseinrichtungen und den Parametern der Beuleuchtungsvorrichtung aufweist,
- wobei die Speichereinrichtungen derart ausgebildet sind, dass sie die erfassten Bilder selbst speichern, und dass sie eine Verbindung zwischen einem jeden erfassten Bild und den Werten eines jeden seiner Erfassungsparameter beibehält,
- die Bilddatenbank (30) eine Mehrzahl von Tabellen (TAB) aufweist, die jeweils Felder aufweisen bezogen mindestens auf Erfassungsbedingungen der Bilder und zur Identifikation des Musters, wobei die Tabellen miteinander gemäß vorgewählten Beziehungen verbunden sind;
- die Bildgebungsvorrichtung weiterhin eine Nachfrageeinheit aufweist, zum Befragen der Bilderdatenbank gemäß wenigstens einer Abfrage, die wenigstens ein Kriterium enthält, das wenigstens einem Erfassungsparameter entspricht, um die Bilder auszuwählen, die auf das Kriterium zutreffen, und um die so ausgewählten Bilder anzuzeigen und/oder zu verarbeiten.

2. Vorrichtung nach Anspruch 1, **dadurch gekennzeichnet, dass** sie weiterhin gemeinsame Verarbeitungs- und Analyseeinrichtungen der erfassten Bilder, ihrer Erfassungskriterien, sowie von Daten aufweist, die mit den erfassten Bildern verbunden und/oder extrahiert sind.

3. Vorrichtung nach Anspruch 2, **dadurch gekennzeichnet, dass** die Verarbeitungs- und Analyseeinrichtungen Verarbeitungsfunktionen der folgenden Gruppe aufweisen: Kontrastverarbeitung, lineares Filtern, mathematische Morphologie-Operationen, Segmentation.

4. Vorrichtung nach Anspruch 2 oder 3, **dadurch gekennzeichnet, dass** die Verarbeitungs- und Analyseeinrichtungen Analysefunktionen der folgenden Gruppe umfassen: Analyse vom Typ der Formenkennzeichnung, Dichtekennzeichnung, Texturkennzeichnung, der Topologie und der räumlichen Organisation.

5. Vorrichtung nach einem der Ansprüche 2 bis 4, **dadurch gekennzeichnet, dass** die Verarbeitungs- und Analyseeinrichtungen Klassifizierungsfunktionen der gezogenen Bilddaten der folgenden Gruppe aufweisen: Tabellenkalkulation, statistisches Analyse- und Bewertungswerkzeug.

6. Vorrichtung nach einem der Ansprüche 1 bis 4, **dadurch gekennzeichnet, dass** die auf die Erfassungsbedingungen der Bilder bezogenen Parameter aus der folgenden Gruppe stammen:
- Koordinaten in X, Y oder Z des Musterträgers (2);
- zeitliche Bedingungen der Bilderfassung;
- Betriebsbedingungen der Lichtquelle (10);
- die Wellenlänge, die Bandbreite, der Dämpfungsfaktor, die Position der Filtriereinrichtungen (18 und 20);
- Art der Betriebsparameter der die ersten und zweiten Transporteinrichtungen (14. 16) bildenden Elemente;
- Betriebsparameter der Erfassungseinrichtungen (28), und
- Betriebsparameter der Verarbeitungseinrichtungen (26).

7. Vorrichtung nach einem der vorhergehenden Ansprüche, **dadurch gekennzeichnet, dass** die Bilddatenbank (30) eine Tabelle der erfassten Bilder (TAB7), die ein Feld ("SCENE") zur Verbindung mit wenigstens einer Tabelle (TAB5) aufweist, bezogen auf eine Szene, in der sich die Bildaufnahme befindet, ein Feld ("Modalité") der Verbindung mit wenigstens einer Tabelle (TAB6), bezogen auf die Ansichtmodalitäten, und ein Feld ("image") für wenigstens eine Verbindung mit wenigstens einer Ergebnistabelle (TAB10, TAB11) bezogen auf Bildelemente genannt Resultate, aufweist.

8. Vorrichtung nach Anspruch 7, **dadurch gekennzeichnet, dass** die Bilddatenbank (30) mehrere Ergebnistabellen (TAB10, TAB11) aufweist, die in der Lage sind, mit der Tabelle der erfassten Bilder verbunden zu werden, und die auf die Bildabschnitte sowie die in dem Bild erkannten Objekte bezogen sind.

9. Vorrichtung nach Anspruch 7 oder 8, **dadurch gekennzeichnet, dass** wenigstens bestimmte Tabellen untereinander gemäß Verhältnissen verbunden sind, vom Typ einer mit mehreren, einer mit einem, und/oder mehrere mit einem.

10. Vorrichtung nach einem der Ansprüche 7 bis 9, **dadurch gekennzeichnet, dass** die Datenbank vom relationellen, integrierten und Mehrzweck-Typ ist.
